(19) Europäisches Patentamt
European Patent Office
Office européen des brevets

(11) **EP 3 848 730 A1**

(12) **EUROPEAN PATENT APPLICATION**
published in accordance with Art. 153(4) EPC

(43) Date of publication:
**14.07.2021 Bulletin 2021/28**

(21) Application number: **19857105.1**

(22) Date of filing: **30.08.2019**

(51) Int Cl.:
**G01S 19/47** (2010.01)

(86) International application number:
**PCT/CN2019/103662**

(87) International publication number:
**WO 2020/048394 (12.03.2020 Gazette 2020/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **04.09.2018 CN 201811025588**

(71) Applicant: **TENCENT TECHNOLOGY (SHENZHEN) COMPANY LIMITED**
**Shenzhen, Guangdong 518057 (CN)**

(72) Inventor: **LIANG, Qiaozhong**
**Shenzhen, Guangdong 518057 (CN)**

(74) Representative: **Eisenführ Speiser**
**Patentanwälte Rechtsanwälte PartGmbB**
**Postfach 31 02 60**
**80102 München (DE)**

(54) **POSITIONING METHOD, APPARATUS AND DEVICE, AND COMPUTER-READABLE STORAGE MEDIUM**

(57) Provided are a positioning method, a positioning apparatus, a positioning device, and a computer storage medium, relating to the technical field of computers. The method comprises: acquiring current change update information, wherein the current change update information comprises GPS positioning information and dead reckoning location information (101); determining a fusion positioning mode matching the current change update information (102); determining error information according to the current change update information (103); and according to the fusion positioning mode, combining the GPS positioning information and dead reckoning location information in the current change update information with the error information to perform fusion positioning so as to obtain a current positioning location (104). The positioning method can dynamically classify the matching fusion positioning mode and error information so as to perform fusion positioning, thereby effectively improving the accuracy of the fusion positioning and providing a better robustness for the performance of different scenarios.

Obtain current change and update information, the current change and update information including GPS positioning information and dead reckoning position information, the dead reckoning position being determined according to attitude change information of a terminal — 101

Determine a fused positioning manner matching the current change and update information, the fused positioning manner being used for performing fused positioning by using information in the current change and update information — 102

Determine error information according to the current change and update information, the error information being used for indicating error conditions of the current change and update information — 103

Perform the fused positioning on the GPS positioning information and the dead reckoning position information in the current change and update information according to the fused positioning manner in combination with the error information, to obtain a current positioned position — 104

FIG. 1

EP 3 848 730 A1

**Description**

RELATED APPLICATION

This application claims priority to Chinese Patent Application No. 201811025588.0, titled "POSITIONING METHOD, POSITIONING APPARATUS, POSITIONING DEVICE, AND COMPUTER STORAGE MEDIUM" filed on September 04, 2018, which is incorporated by reference in its entirety.

FIELD OF THE TECHNOLOGY

This application relates to the field of computer technologies, and in particular, to a positioning method, apparatus and device, and a readable storage medium.

BACKGROUND OF THE DISCLOSURE

In the field of in-vehicle navigation, Global Positioning System (GPS) is used as a basic reference element of positioning. GPS is characterized by relatively high precision in a long time, but has a problem of inaccuracy in some cases. For example, in an area such as an urban road having high-rise buildings, a problem of signal drift is prone to appear because of influences of factors such as geographic obstruction and weather. In an area such as an underground parking lot or a field tunnel, a case that a GPS signal is unavailable may occur. In the cases, the in-vehicle navigation that performs positioning and navigation based on the GPS signal may also be affected to a relatively large extent.
In order to make up for influences caused by the defects of the GPS, an inertial measurement unit is usually used as an auxiliary element of GPS positioning. In a case that the GPS signal is good, GPS information is used as a basic element of positioning, while in a case that the GPS signal is not good or there is no GPS signal, information from the inertial measurement unit is used as the basic element of positioning.
However, a signal threshold of the GPS signal is set in general at present. In a case that intensity of the GPS signal is lower than the signal threshold, the information from the inertial measurement unit is used as the basic element to perform the positioning after switching, and accuracy of positioning precision is not high.

SUMMARY

Embodiments of this application provide a positioning method, apparatus and device, and a readable storage medium, which can be used for resolving a problem that accuracy of positioning precision is not high. The technical solutions are as follows.
In an aspect, a positioning method is provided, including:

obtaining current change and update information, the current change and update information including GPS positioning information and dead reckoning position information, the dead reckoning position information being determined according to attitude change information of a terminal;

determining a fused positioning manner matching the current change and update information, the fused positioning manner being used for performing fused positioning by using information in the current change and update information;

determining error information according to the current change and update information, the error information being used for indicating error conditions of the current change and update information; and

performing the fused positioning on the GPS positioning information and the dead reckoning position information in the current change and update information according to the fused positioning manner in combination with the error information, to obtain a current positioned position.

In another aspect, a positioning apparatus is provided, including:

an obtaining module, configured to obtain current change and update information, the current change and update information including GPS positioning information and dead reckoning position information, the dead reckoning position information being determined according to attitude change information of a terminal;

a determining module, configured to determine a fused positioning manner matching the current change and update information, the fused positioning manner being used for performing fused positioning by using information in the current change and update information;

the determining module being further configured to determine error information according to the current change and update information, the error information being used for indicating error conditions of the current change and update information; and

a positioning module, configured to perform the fused positioning on the GPS positioning information and the dead reckoning position information in the current change and update information according to the fused positioning manner in combination with the error information, to obtain a current positioned position.

In another aspect, a computer device is provided, including a memory and a processor, the memory storing a computer program, and the processor, when executing the computer program, performing the steps of the foregoing method.

In another aspect, a non-volatile computer-readable storage medium with a computer program stored thereon is provided, the computer program, when executed by a processor, implementing the steps of the foregoing method.

The technical solutions provided in the embodiments of this application have at least the following beneficial effects:

GPS positioning information and dead reckoning position information are obtained, and a matched fused positioning manner and error information are determined based on the information. Then, fused positioning is performed according to the matched fused positioning manner and the error information, to obtain a current positioned position, so that the matched fused positioning manner can be classified dynamically, to perform the fused positioning, which can effectively improve precision of the fused positioning, and can provide relatively good robustness for the performance of different scenarios.

BRIEF DESCRIPTION OF THE DRAWINGS

To describe the technical solutions of the embodiments of this application more clearly, the following briefly describes the accompanying drawings for describing the embodiments. Apparently, the accompanying drawings in the following description show only some embodiments of this application, and a person of ordinary skill in the art may still derive other accompanying drawings from the accompanying drawings without creative efforts.

FIG. 1 is a flowchart of a positioning method according to an exemplary embodiment of this application.

FIG. 2 is a schematic principle diagram of a positioning method according to an exemplary embodiment of this application.

FIG. 3 is a flowchart of a positioning method according to another exemplary embodiment of this application.

FIG. 4 is a flowchart of a positioning method according to another exemplary embodiment of this application.

FIG. 5 is a flowchart of a positioning method according to another exemplary embodiment of this application.

FIG. 6 is a schematic structural diagram of modules of a positioning apparatus according to an exemplary embodiment of this application.

FIG. 7 is a diagram of an internal structure of a positioning device according to an exemplary embodiment of this application.

DESCRIPTION OF EMBODIMENTS

To make the objectives, technical solutions, and advantages of this application clearer, the following further describes implementations of this application in detail with reference to the accompanying drawings.

In an embodiment, a positioning method provided in this application may be applied to any related device (for example, an in-vehicle navigator) which can perform positioning with inertial sensing parameters measured by an inertial measurement unit, to perform the positioning. The related device includes the inertial measurement unit and a GPS positioning apparatus, the inertial measurement unit being an apparatus for measuring a three-axis attitude angle (or angular rate) and acceleration of an object. For example, the related device is an in-vehicle navigator. After the inertial measurement unit measures attitude change information and the GPS positioning apparatus obtains GPS positioning information, the related device may combine the attitude change information and the GPS positioning information to match a fused positioning manner for fused positioning, to obtain a final positioned position. In another embodiment, the positioning method may alternatively be applied to another device that can perform related computation. After obtaining attitude change information and GPS positioning information transmitted by a device such as an in-vehicle navigator, the device may match a fused positioning manner for fused positioning, to obtain a final positioned position. Then, the obtained final positioned position is returned to the device such as the in-vehicle navigator, so that the device can apply the obtained final positioned position. In the following embodiments of this application, the description is made with reference to an example that the related device matches a fused positioning manner for fused positioning, to obtain a final positioned position.

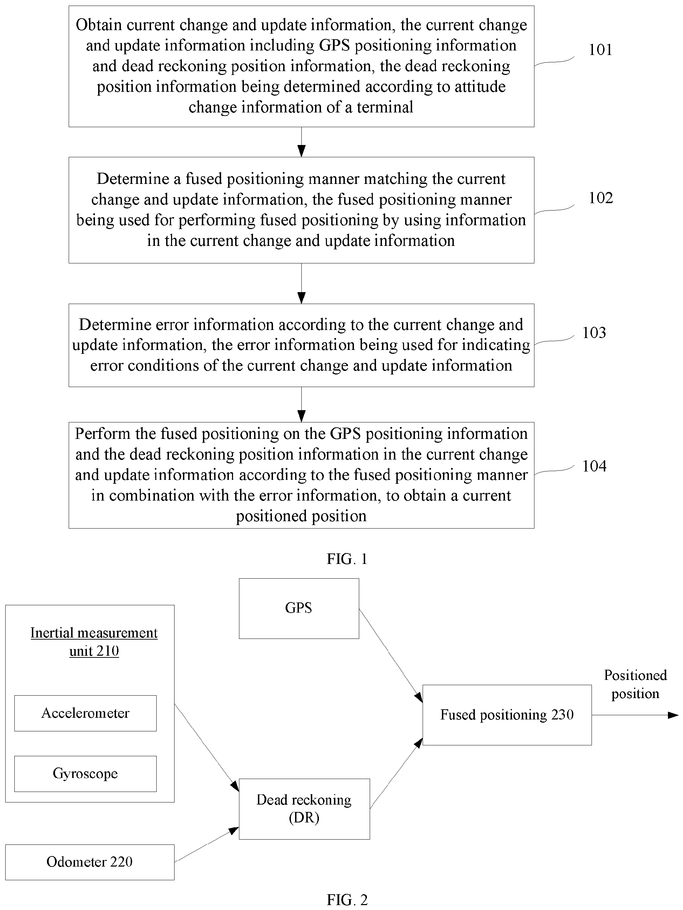

FIG. 1 is a flowchart of a positioning method according to an exemplary embodiment of this application. The description is made with reference to an example that the method is applied to a terminal. As shown in FIG. 1, the method includes steps 101 to 104.

Step 101 includes obtaining current change and update information, the current change and update information including GPS positioning information and dead reckoning position information, the dead reckoning position information being determined according to attitude change information of the terminal.

Optionally, an in-vehicle navigation device is used as an example. After the in-vehicle navigation device is started, the change and update information is obtained every regular time period.

The foregoing GPS positioning information refers to GPS positioning information detected by a GPS positioning module at a current moment, for example, a GPS angle, a GPS position, and the like. The foregoing current attitude change information may be determined by using related parameters detected by an inertial measurement unit.

The inertial measurement unit is an apparatus for measuring a three-axis attitude angle (or angular rate) and acceleration of an object. In an embodiment, the inertial measurement unit includes at least one of an accelerometer and a gyroscope. The accelerometer is an instrument used for measuring acceleration. The gyroscope, also referred to as an angular velocity sensor, is an instrument used for measuring rotational angular velocity of an object when deflecting or tilting, or used for sensing directions. In this case, the corresponding current attitude change information may include parameters such as measured acceleration and angular velocity.

As described above, in determining the dead reckoning position information according to the current attitude change information, the dead reckoning position information may be obtained by performing dead reckoning (DR) on the current attitude change information.

Optionally, the dead reckoning position information may be determined in at least one of the following manners:

a first manner, performing odometer error processing on odometer data recorded by an odometer, and performing dead reckoning according to the current attitude change information after performing a speed update based on the odometer data subjected to the odometer error processing, to obtain the dead reckoning position information, the attitude change information including speed information;

a second manner, updating the attitude change information according to a rotation speed of a gyroscope and two angular velocity increments successively acquired by the gyroscope; and performing dead reckoning according to the updated current attitude change information, to obtain the dead reckoning position information;

a third manner, performing dead reckoning according to the current attitude change information after performing attitude alignment based on acceleration acquired by an accelerometer, to obtain the dead reckoning position information; and

a fourth manner, performing dead reckoning according to the current attitude change information after performing attitude alignment based on a GPS azimuth and acceleration acquired by the accelerometer, to obtain the dead reckoning position information.

Step 102 includes determining a fused positioning manner matching the current change and update information.

As described above, the fused positioning manner may be a fused positioning manner determined from at least two fused positioning manners, the at least two fused positioning manners including: a Kalman filter-based fused positioning manner and a particle filter-based fused positioning manner. The fused positioning manners may alternatively include another type of fused positioning manner, and include a larger quantity of fused positioning manners.

In an embodiment, a preceding matched fused positioning manner may be determined as the matched fused positioning manner determined from the at least two fused positioning manners. Specifically, in a case that a current moment is within a preset time period from matching of the preceding fused positioning manner, the preceding matched fused positioning manner may be determined as the matched fused positioning manner. In this way, the preceding matched fused positioning manner may be directly used for fused positioning, so that there is no need to dynamically and constantly determine a suitable fused positioning manner, thereby saving device performance, improving processing efficiency, and improving smoothness.

In an embodiment, after the in-vehicle navigation device is started, history change and update information before the start may be used as sample change and update information, and a fused positioning model may be trained by using the sample change and update information, to obtain a trained fused positioning model. A correspondingly matched fused positioning manner may be obtained by inputting current change and update information into the fused positioning model.

In another embodiment, the foregoing training process of the fused positioning model may also be performed after the in-vehicle navigation device is started, with change and update information acquired in a time period with a specified time length from the start used as sample change and update information. That is, in the entire time period with the specified time length after the in-vehicle navigation device is started, fused positioning manners in an initial fused positioning model are used for fused positioning, so that the fused positioning model obtained by training better fits a current actual usage status of the in-vehicle navigation device, thereby improving positioning performance such as smoothness in an actual positioning process. In this embodiment, the current change and update information refers to change and update information obtained in a positioning process after obtaining the fused positioning model by training.

Optionally, the determining the matched fused positioning manner may include the following steps 1021 and 1022.

Step 1021 includes determining model input features based on the current change and update information.

In an embodiment, in determining the model input features, information processing may be performed based on the foregoing current change and update information, to obtain the model input features corresponding to input parameters of the fused positioning model.

As described above, for example, a Kalman filter-based fused positioning manner is included. In this case, the model input features determined based on the current change and update information may include parameters such as a dead reckoning angle, a dead reckoning position error, a gyroscope drift, a mileage error coefficient, a GPS angle error, and a GPS position error. It may be understood that, on the basis that the fused positioning manners included in the fused positioning model are different, corresponding model input features (for example, a quantity and a type) may be different. Therefore, a detailed manner of obtaining the model input features is not specifically limited in this embodiment.

The determined model input features may be combined into an eigenvector or a feature matrix, which is inputted into the fused positioning model.

Step 1022 includes inputting the model input features into the fused positioning model obtained by training, to determine the fused positioning manner matching the current change and update information.

Optionally, the fused positioning model is obtained based on the foregoing training, and weights corresponding to respective input parameter features of the fused positioning model are determined. The model input features are inputted into the fused positioning model obtained by training, so that probabilities that the change and update information belongs to classes of respective fused positioning manners may be determined based on values corresponding to the respective input parameter features corresponding to the change and update information and the weights corresponding to the respective input parameter features. For example, the fused positioning model includes a Kalman filter-based fused positioning manner and a particle filter-based fused positioning manner. By inputting the model input features into the fused positioning model obtained by training, a probability 1 that the change and update information is classified into the Kalman filter-based fused positioning manner and a probability 2 that the change and update information is classified into the particle filter-based fused positioning manner may be obtained.

In an embodiment, a fused positioning manner corresponding to a maximum probability may be determined as a classification result of the matched fused positioning manner. For example, in a case that a value of the probability 1 is greater than a value of the probability 2, the Kalman filter-based fused positioning manner is determined as the classification result of the matched fused positioning manner. That is, the matched fused positioning manner is the Kalman filter-based fused positioning manner.

In an embodiment, a fused positioning manner corresponding to a probability whose value is maximum and greater than or equal to a probability threshold may be determined as the classification result of the matched fused positioning manner. For example, in a case that the value of the probability 1 is greater than the value of the probability 2, and the value of the probability 1 is greater than or equal to the probability threshold, the Kalman filter-based fused positioning manner is determined as the classification result of the matched fused positioning manner. That is, the matched fused positioning manner is the Kalman filter-based fused positioning manner. The probability threshold may be set according to actual technical requirements, as long as an obviously better fused positioning manner can be matched based thereon.

Correspondingly, in an embodiment, in a case that the probability with the maximum value is less than the probability threshold, a fused positioning manner used at a preceding moment (which may be a fused positioning manner matched at the preceding moment itself, or a fused positioning manner matched before the preceding moment) may be determined as the classification result of the matched fused positioning manner. As described above, in a case that the value of the probability 1 is greater than the value of the probability 2 and the value of the probability 1 is less than the probability threshold, it indicates that a advantageous difference between the Kalman filter-based fused positioning manner and the particle filter-based fused positioning manner for the fused positioning is not significant, in which case the fused positioning manner adopted at the preceding moment is directly used so as to provide the positioning process with relatively good smoothness.

Step 103 includes determining error information according to the current change and update information.

Optionally, for different fused positioning manners, the information that correspondingly needs to be used is different. For example, the particle filter-based fused positioning manner estimates a fused positioned position based on probability distribution of particles, and calculation of the error information is not necessary. The Kalman filter-based fused positioning manner needs to perform the fused positioning in combination with the dead reckoning position information, and this process needs to be performed in combination with the error information. In this embodiment, the description is made with reference to an example of a fused positioning manner including error information parameters.

In an embodiment, the error information may be determined based on GPS positioning information and dead reckoning position information. The error information may include at least one of a GPS positioning error, a dead reckoning error, and an inter-positioning-information error between the GPS positioning information and the dead reckoning position information.

The GPS positioning error includes at least one of a GPS angle error and a GPS position error; the dead reckoning error may be determined based on GPS position increments of the GPS positioning information for a preset number of successive times, and may specifically include at least one of a DR position error, a gyroscope drift and a DR mileage error coefficient; and the inter-positioning-information error includes at least one of an angle error between the GPS positioning information and the dead reckoning position information, and a position error between the GPS positioning information and the dead reckoning position information.

Step 104 includes performing the fused positioning on the GPS positioning information and the dead reckoning information in the current change and update information according to the fused positioning manner in combination with the error information, to obtain a current positioned position.

Optionally, the fused positioning based on the matched fused positioning manner may be performed based on an existing fused positioning process of the matched fused positioning manner, or based on an improved process of the fused positioning manner, which is not limited in this embodiment.

Optionally, in a fused positioning process, according to the GPS positioning information and the dead reckoning position information in combination with the foregoing determined error information, the fused positioning is performed on corresponding information in the current change and update information, to determine the current positioned position. In an embodiment, an initial positioned position obtained by the fused positioning is updated based on the foregoing determined error information, to obtain a final current positioned position.

In an embodiment, for example, the matched fused positioning manner is the Kalman filter-based fused positioning manner. The Kalman filter-based fused positioning manner used for the fused positioning to obtain the final positioned position may be any Kalman filter-based fused positioning manner which exists currently or may emerge in the future, which is not further detailed herein redundantly. As described above, in performing the fused positioning, a weighted parameter Q of a predicted value may be used as a fixed value, a weighted parameter R of a measured value may be used as an adjustable value, and the weighted parameter R of the measured value may be adjusted based on a relative error of the GPS positioning information.

It is to be understood that, although several detailed fused positioning algorithms are provided in the description of the foregoing embodiments, in an actual technical implementation process, other fused positioning manners may be further supplemented or added to the fused positioning model, which is not limited.

For example, reference is made to FIG. 2, which is a schematic principle diagram of a positioning method according to an exemplary embodiment of this application. Dead reckoning (DR) is determined by using an inertial measurement unit 210 and an odometer 220, and fused positioning 230 is achieved according to GPS and the DR, so as to obtain and output a positioned position.

Based on the above, according to the positioning method provided in this embodiment of this application, GPS positioning information and dead reckoning position information are obtained, and a matched fused positioning manner and error information are determined based on the information. Then, fused positioning is performed according to the matched fused positioning manner and the error information, to obtain a current positioned position, so that the matched fused positioning manner can be classified dynamically, to perform the fused positioning, which can effectively improve precision of the fused positioning, and can provide relatively good robustness for the performance of different scenarios.

In an embodiment, a fused positioning model is first obtained by means of training and learning, and then the fused positioning model is applied to an actual positioning process, to implement real-time fused positioning. The fused positioning model may be obtained by training of a device (for example, an in-vehicle navigation device) which actually performs positioning, and applied to the device. Alternatively, the fused positioning model may be obtained by training of a third-party device (for example, a server), and the fused positioning model obtained by training may be transmitted to a device (for example, an in-vehicle navigation device) which actually performs positioning, so that the device completes the actual positioning process.

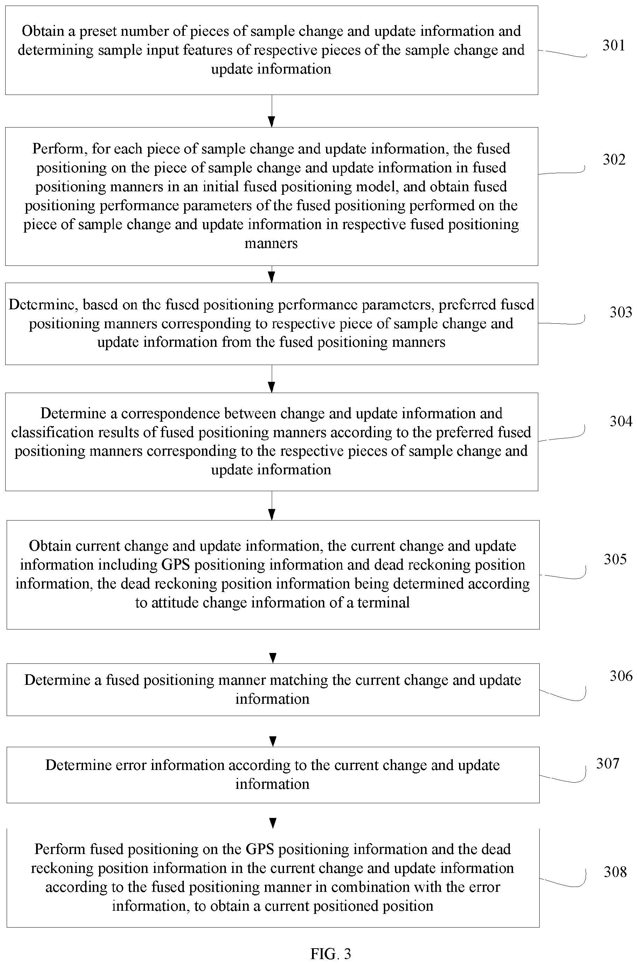

The fused positioning model obtained by the training and learning is used as an example. As shown in FIG. 3, a positioning method in an embodiment includes the following steps 301 to 308.

Step 301 includes obtaining a preset number of pieces of sample change and update information and determining sample input features of respective pieces of the sample change and update information.

In a model training process, after the sample change and update information is obtained, all of the sample change and update information may be used as a set, or all of the sample change and update information may be divided into a plurality of sets. Each set includes a specified quantity of sample change and update information, and the quantity of sample change and update information included in each set may be set according to actual technical requirements. In this embodiment, the number of pieces of sample change and update information included in a set is recorded as the preset number.

In an embodiment, each piece of sample change and update information may include: sample GPS positioning information and sample dead reckoning position information associated with each other. In another embodiment, each piece of sample change and update information may include: sample GPS positioning information and sample attitude change information associated with each other, where dead reckoning is performed based on the sample attitude change information when the training is to be performed or in an initial stage of the training, to obtain corresponding sample dead reckoning position information. The sample GPS positioning information may be GPS information obtained by using a GPS positioning module, or GPS positioning information obtained in other manners.

The dead reckoning refers to reckoning a position at a next moment by measuring a distance and an orientation of movement under a condition that a position at a current moment is given. In obtaining the corresponding dead reckoning position information by performing dead reckoning based on the attitude change information, a process of the dead reckoning may include two parts, namely, a vehicle attitude update and a position update provided by a gyroscope. In an embodiment, the dead reckoning may be performed after a speed update. The speed update may be determined based on odometer data provided by an odometer. During the speed update, odometer error processing is performed on the odometer data recorded by the odometer, and the speed update is performed based on the odometer data subjected to the odometer error processing.

The vehicle attitude update may be performed by using the following update equation (1):

$$q_{bk}^{n} = q_{bk-1}^{n} q_{bk}^{bk-1} \tag{1}$$

where $q_{bk}^{n}$ is an attitude quaternion of a system N (navigation coordinate system) at a moment k, $q_{bk-1}^{n}$ is an attitude quaternion of the system N at a moment k-1, and $q_{bk}^{bk-1}$ is an attitude transformation quaternion of a system B (body coordinate system) from the moment k-1 to the moment k. $q_{bk}^{bk-1}$ may be determined based on a rotation angular velocity $w_{nb}^{b}$ of the system B relative to the system N. A corresponding equivalent rotation vector from a moment tk-1 to a moment tk is:

$$A_{k} = \int_{tk-1}^{tk} w_{nb}^{b} dt = \int_{tk-1}^{tk} \left\{ w_{ib}^{b} - \left[ C_{b}^{n} \right]^{T} w_{in}^{n} \right\} dt \tag{2}$$

where $w_{ib}^{b}$ indicates an angular velocity of the system B relative to a system I (geocentric inertial coordinate system), $w_{nb}^{b}$ indicates the rotation angular velocity of the system B relative to the system N, and $C_{b}^{n}$ indicates a coordinate matrix from the system B to the system N; $w_{in}^{n} = w_{ie}^{n} + w_{en}^{n}$, where $w_{ie}^{n}$ is an angular velocity of earth rotation, being a constant value, and $w_{en}^n$ indicates a northward component of an angular velocity of the system N relative to a system E (earth coordinate system); and

$$w_{en}^n = \left[ \frac{v_n^n}{r_m + h_{k-1}}, \frac{v_e^n}{r_m + h_{k-1}}, \frac{v_e^n \tan Lon_{k-1}}{r_n + h_{k-1}} \right]^T \qquad (3)$$

where $v_n^n$ indicates an inertial navigation northward speed, $r_m$ indicates a major semi-axis length of the earth, $h_{k-1}$ indicates an altitude at the moment k-1, $v_e^n$ indicates an inertial navigation eastward speed, tan indicates a trigonometric function of tangent, $Lon_{k-1}$ indicates longitude at the moment k-1, and $r_n$ indicates a minor semi-axis length of the earth.

$\int_{tk-1}^{tk} w_{ib}^b dt$ may be calculated by using a two-sample algorithm of the equivalent rotation vector:

$$A_{ib} = \int_{tk-1}^{tk} w_{ib}^b dt = delta\left(A_1\right) + delta\left(A_2\right) + \frac{2}{3} delta\left(A_1\right) delta\left(A_2\right) \qquad (4)$$

where $A_{ib}$ indicates a rotation angle of a gyroscope from the moment k-1 to the moment k, *delta* $(A_1)$ and *delta* $(A_2)$ are two angular velocity increments successively acquired by the gyroscope.

Based on the above, the position update may be performed by using the following formulas:

$$Lon_k = Lon_{k-1} + \frac{tv_e^n \sec Lat_k}{r_n + h_{k-1}} \qquad (5)$$

$$Lat_k = Lat_{k-1} + \frac{tv_n^n}{r_m + h_{k-1}} \qquad (6)$$

$$h_k = h_{k-1} + tv_u^n \qquad (7)$$

where $Lon_k$ indicates longitude at the moment k, t indicates time, $v_e^n$ indicates the inertial navigation eastward speed, sec is a trigonometric function of secant, $r_n$ indicates the minor semi-axis length of the earth, Lat refers to latitude, $Lat_k$ indicates latitude at the moment k, $r_m$ indicates the major semi-axis length of the earth, and $v_u^n$ indicates an inertial navigation antenna speed. Based on this, error equations of DR may be obtained as follows:

$$delta\left(P\right) = p_1 A + p_2 delta\left(P\right) + p_3 \qquad (8)$$

$$delta\left(A\right) = a_1 A + a_2 delta\left(P\right) + a_3 \qquad (9)$$

Values of parameters (including $p_1$, $p_2$, $p_3$, $a_1$, $a_2$, and $a_3$) in the error equations may be determined by substituting the foregoing DR error equations (8) and (9) into the foregoing formulas (1) to (7), and the values may be applied to model training and actual positioning processes. It may be seen based on the foregoing DR error equations that, a position error delta(P) at a current moment and an inertial navigation angle error delta(A) may be determined according to an inertial navigation angle A at the current moment and an inertial navigation angle error delta(P) at a previous moment.

As described above, during the dead reckoning, it is unnecessary to use information from an accelerometer.

In an embodiment of this application, the foregoing dead reckoning process may alternatively be performed after attitude alignment is performed by using acceleration measured by an accelerometer. The attitude alignment herein mainly refers to pitch and roll alignment, which is not specifically limited in this embodiment. In an embodiment, an in-vehicle navigation system is used as an example. In a case that the in-vehicle navigation system uses an MEMS gyroscope, a GPS azimuth may be used for assisting in the alignment. For example, the dead reckoning may be performed after attitude alignment is performed according to acceleration measured by an accelerometer and the GPS azimuth.

Step 302 includes performing, for each piece of sample change and update information, the fused positioning on the piece of sample change and update information in fused positioning manners in an initial fused positioning model, and obtaining fused positioning performance parameters of the fused positioning performed on the piece of sample change and update information in respective fused positioning manners.

Optionally, the fused positioning performance parameters may include any parameter that can be used for evaluating performance of the fused positioning. For example, the fused positioning performance parameters may include, but are not limited to, parameters such as time consumption of the fused positioning, resource occupation of the fused positioning and positioning precision.

Input of the initial fused positioning model may include GPS positioning information and current attitude change information, or may include GPS positioning information and dead reckoning position information obtained by performing dead reckoning based on the current attitude change information. The initial fused positioning model may include more than two fused positioning manners. In an embodiment, a particle filter-based fused positioning manner and a Kalman filter-based fused positioning manner may be included. In other embodiments, the initial fused positioning model may alternatively include other fused positioning manners or include more fused positioning manners such as a fused positioning manner of Bayesian estimation and a fused positioning manner of fuzzy logic. In the following example, for the purpose of brevity, the description is made with reference to an example that the particle filter-based fused positioning manner and the Kalman filter-based fused positioning manner are both included.

For example, the initial fused positioning model includes both the particle filter-based fused positioning manner and the Kalman filter-based fused positioning manner. In an aspect, the fused positioning is performed on the sample change and update information in the particle filter-based fused positioning manner, to obtain a sample fused positioned position determined by performing the fused positioning on the sample change and update information in the particle filter-based fused positioning manner and obtain the fused positioning performance parameters. A specific process of the fused positioning may be performed based on any existing or future possible manner of a particle filter fused algorithm. In another aspect, the fused positioning is performed on the sample change and update information in the Kalman filter-based fused positioning manner, to obtain a sample fused positioned position determined by performing the fused positioning on the sample change and update information in the Kalman filter-based fused positioning manner and obtain the fused positioning performance parameters.

In a Kalman filter algorithm, the following five basic equations are included, where an equation (10) and an equation (11) are time update equations, and an equation (12), an equation (13), and an equation (14) are state update equations.

$$X_{(k|k-1)} = FX_{(k-1|k-1)} + BU_{(k)} \tag{10}$$

$$P_{(k|k-1)} = FP_{(k-1|k-1)}F^T + Q \tag{11}$$

$$X_{(k|k)} = X_{(k|k-1)} + Kg_{(k)}\left(Z_{(k)} - HX_{(k|k-1)}\right) \tag{12}$$

$$Kg_{(k)} = P_{(k|k-1)}H^T\left(HP_{(k|k-1)}\big|H^T + R\right)^{-1} \tag{13}$$

$$P_{(k|k)} = \left(I - Kg_{(k)}H\right)P_{(k-1|k-1)} \tag{14}$$

As described in the foregoing equations (10) to (14), in the Kalman filter algorithm, there are two parameters Q and R. The parameter Q represents statistical characteristics of a Kalman filter algorithm model, reflects weighting of a predicted value of the model, and is referred to as a weighted parameter Q of the predicted value in this embodiment of this application. The parameter R represents noise measurement characteristics in a measurement process, reflects weighting of a measured value, and is referred to as a weighted parameter R of the measured value in this embodiment of this application. A larger weighted parameter Q of the predicted value indicates that the measured value is more trusted. A larger weighted parameter R of the measured value indicates that the predicted value of the model is more trusted.

I in the equation (14) is a matrix of 1. For single-model single measurement, I = 1.

In this embodiment, the foregoing two equations (10) and (11) are used as prediction equations, and the foregoing equations (12), (13), and (14) are used as update equations. State modeling is performed according to the Kalman filter algorithm, and a model after the modeling may include related parameters for Kalman filter-based positioning, such as, dead reckoning position information, a dead reckoning error, and the like. In an embodiment, a model after the modeling may include the following related contents:

$$X = \left[ A_{dr}, delta\left(P_{dr}\right), E, delta\left(K\right), delta\left(A_g\right), delta\left(P_g\right) \right]^T \tag{15}$$

$$F = \begin{bmatrix} F1_{3\times3}, F2_{3\times3}, 0_{3\times3}, 0_{3\times3}, -C^n_{b\,3\times3}, F3_{3\times3}, \\ F4_{3\times3}, F5_{3\times3}, 0_{3\times3}, 0_{3\times3}, 0_{3\times3}, F6_{3\times3}, 1_{3\times3}, \\ 0_{3\times6}, 1_{3\times3}, 0_{3\times9}, \\ 0_{3\times9}, 1_{3\times3}, 0_{3\times6}, \\ 0_{3\times12}, 1_{3\times3}, 0_{3\times3}, \\ 0_{3\times15}, 1_{3\times3} \end{bmatrix} \tag{16}$$

$$\begin{aligned} Z_p &= P_g - P_{dr} \\ &= \left(P + delta\left(P_g\right)\right) - \left(P + delta\left(P_{dr}\right)\right) \\ &= delta\left(P_g\right) - delta\left(P_{dr}\right) \end{aligned} \tag{17}$$

$$Z_a = delta\left(A_{dr}\right) - delta\left(P_{dr}\right) \tag{18}$$

$$Z = \begin{bmatrix} Z_p & Z_a \end{bmatrix}^T \tag{19}$$

$$H = \begin{bmatrix} -I_{3\times3}, 0_{3\times3}, I_{3\times3}, 0_{3\times3}, 0_{3\times3}, 0_{3\times3}, \\ 0_{3\times3}, -I_{3\times3}, 0_{3\times3}, I_{3\times3}, 0_{3\times3}, 0_{3\times3} \end{bmatrix} \tag{20}$$

It can be determined based on the formula (15) that, in this application, Kalman filter-based fused positioning may be performed based on a dead reckoning angle, a dead reckoning position error, a gyroscope drift, a mileage error coefficient, a GPS angle error and a GPS position error. $A_{dr}$ indicates the DR angle, *delta* $(P_{dr})$ indicates the DR position error, E indicates the gyroscope drift, delta(K) indicates a DR mileage error coefficient, *delta* $(A_g)$ indicates the GPS angle error, and *delta* $(P_g)$ indicates the GPS position error. $F1_{3\times3}$ indicates a matrix F1 with 3 rows and 3 columns, $F2_{3\times3}$ indicates a matrix F2 with 3 rows and 3 columns, and so on for $F3_{3\times3}$, $F4_{3\times3}$, $F5_{3\times3}$, and $F6_{3\times3}$. $0_{3\times3}$ indicates a null matrix with 3 rows and 3 columns, the null matrix meaning that all elements in the matrix are 0. $C^n_{b\,3\times3}$ indicates a translation matrix with 3 rows and 3 columns from coordinate system B to coordinate system N. $1_{3\times3}$ indicates a unit matrix with 3 rows and 3 columns, the unit matrix meaning that all diagonal elements in the matrix are 1 and all the other elements are 0. $0_{3\times6}$ indicates a null matrix with 3 rows and 6 columns, $0_{3\times9}$ indicates a null matrix with 3 rows and 9 columns, $0_{3\times12}$ indicates a null matrix with 3 rows and 12 columns, and $0_{3\times15}$ indicates a null matrix with 3 rows and 15 columns. P indicates current position information, and the current position information in an embodiment includes longitude, latitude, and altitude. $Z_p$ indicates a position error between GPS positioning information and DR positioning information, and $Z_a$ indicates an angle error between the GPS positioning information and the DR positioning information.

Therefore, in a case that the initial fused positioning model includes the Kalman filter-based fused positioning manner, the performing the fused positioning on the sample change and update information in the Kalman filter-based fused positioning manner may include the following steps A1 to A3.

Step A1 includes determining, based on sample dead reckoning position information, a corresponding sample dead reckoning error according to the error equations (8) and (9) established above.

Step A2 includes performing the fused positioning based on sample GPS positioning information and the sample dead reckoning position information in the Kalman filter-based fused positioning manner in the initial fused positioning model, to obtain an initial fused positioned position, initial fused positioning performance parameters and a corrected value of the sample dead reckoning error that are corresponding to the Kalman filter-based fused positioning manner.

In an embodiment, in a process of performing the fused positioning on the sample change and update information in the Kalman filter-based fused positioning manner, a weighted parameter Q of a predicted value may be used as a fixed value, and a weighted parameter R of a measured value may be used as an adjustable value for adjustment. For example, the weighted parameter R of the measured value may be adjusted based on relative error DOP (dilution of precision) of the GPS positioning information, so that in a place where a GPS signal is not good, a fusion result may incline towards DR information.

Step A3 includes correcting the initial fused positioned position based on the corrected value of the sample dead reckoning error, to obtain a corresponding fused positioned position and corresponding fused positioning performance parameters.

Step 303 includes determining, based on the fused positioning performance parameters, preferred fused positioning manners corresponding to respective pieces of sample change and update information from the fused positioning manners.

In determining the preferred fused positioning manners based on the fused positioning performance parameters, any possible manner may be used on a basis that information contents specifically included in the fused positioning performance parameters are different.

For example, the fused positioning performance parameters include only resource occupation of the fused positioning. In this case, a fused positioning manner corresponding to smallest resource occupation may be determined as a preferred fused positioning manner corresponding to a piece of sample change and update information. For example, the fused positioning performance parameters include more than two parameters. In this case, the two parameters may be comprehensively considered (for example, after weighting), from which a fused positioning manner corresponding to a weighted optimal value (for example, a maximum value or a minimum value) is selected and determined as the preferred fused positioning manner corresponding to the piece of sample change and update information. In other embodiments, the preferred fused positioning manner corresponding to the piece of sample change and update information may alternatively be determined in other manners.

Step 304 includes determining a correspondence between change and update information and classification results of fused positioning manners according to the preferred fused positioning manners corresponding to the respective pieces of sample change and update information.

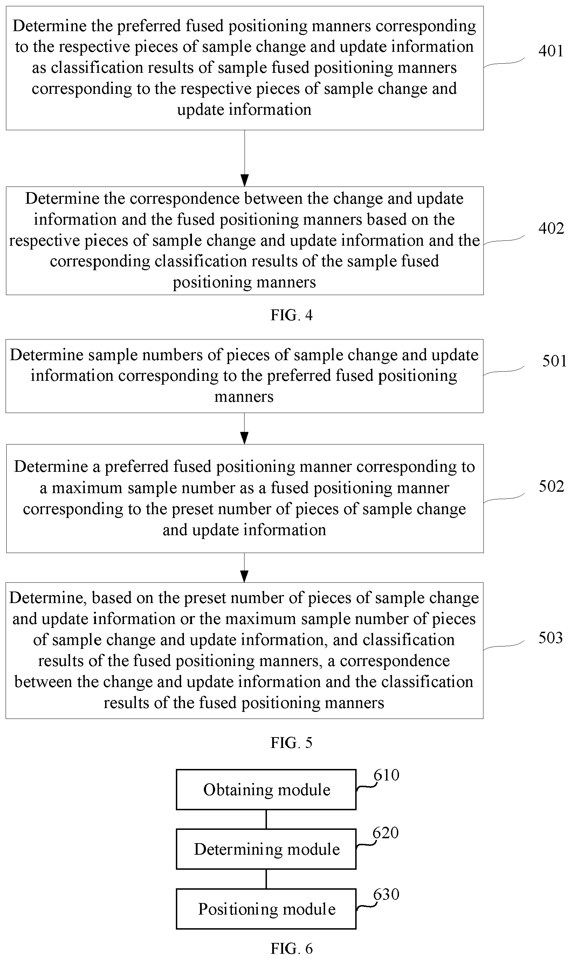

In an embodiment, the correspondence between the change and update information and the classification results of the fused positioning manners may be determined according to all of the sample change and update information, which, as shown in FIG. 4, includes the following steps 401 and 402.

Step 401 includes determining the preferred fused positioning manners corresponding to the respective pieces of sample change and update information as classification results of sample fused positioning manners corresponding to the respective pieces of sample change and update information.

That is, based on the idea of classification, for each piece of sample change and update information, a corresponding preferred fused positioning manner is determined as a classification result for the piece of sample change and update information.

Step 402 includes determining the correspondence between the change and update information and the fused positioning manners based on the respective pieces of sample change and update information and the corresponding classification results of the sample fused positioning manners.

Any possible manner may be used for determining the correspondence, for example, curve fitting, which is not specifically limited in this embodiment.

In another embodiment, the correspondence between the change and update information and the classification results of the fused positioning manners may be determined only based on most of the sample change and update information. The most of the sample change and update information corresponds to the same preferred fused positioning manner, and accounts for most of the preset number of pieces of sample change and update information. As shown in FIG. 5, the above process includes the following steps 501 to 503.

Step 501 includes determining sample numbers of pieces of sample change and update information corresponding to the preferred fused positioning manners.

It is assumed that the preset number is N and the initial positioning model includes two fused positioning manners: the Kalman filter-based fused positioning manner and the particle filter-based fused positioning manner. If preferred fused positioning manners corresponding to K1 pieces of sample change and update information in the N pieces of sample change and update information are the Kalman filter-based fused positioning manner, the sample number of pieces of sample change and update information corresponding to the Kalman filter-based fused positioning manner is K1; and if preferred fused positioning manners corresponding to K2 pieces of sample change and update information are the particle filter-based fused positioning manner, the sample number of pieces of sample change and update information corresponding to the particle filter-based fused positioning manner is K2.

Step 502 includes determining a preferred fused positioning manner corresponding to a maximum sample number as a fused positioning manner corresponding to the preset number of pieces of sample change and update information.

As described above, in a case that K1 is greater than K2, the Kalman filter-based fused positioning manner is determined as a classification result of the sample fused positioning manner corresponding to the N pieces of sample change and update information.

In an embodiment, a preferred fused positioning manner corresponding to a maximum sample number of which a proportion to the preset number is larger than a preset proportion may alternatively be determined as the classification result of the fused positioning manner corresponding to the preset number of pieces of sample change and update information. As described above, in a case that K1 is greater than K2 and K1/N is greater than or equal to the preset proportion, the Kalman filter-based fused positioning manner is determined as a classification result of the sample fused positioning manner corresponding to the N pieces of sample change and update information. By setting the preset proportion, only in a case that a fused positioning manner has a relatively large advantage is the fused positioning manner determined as the classification result of the sample fused positioning manner, to improve performance.

Step 503 includes determining, based on the preset number of pieces of sample change and update information or the maximum sample number of pieces of sample change and update information, and classification results of the fused positioning manners, a correspondence between the change and update information and the classification results of the fused positioning manners.

Optionally, any possible manner may be used for determining the correspondence, for example, curve fitting, which is not specifically limited in this embodiment.

After the foregoing training is completed, a fused positioning model may be determined based on the determined correspondence between the change and update information and the classification results of the fused positioning manners in a case that a training ending condition is met. Otherwise, the initial fused positioning model is updated. For example, weights corresponding to input parameter features in the initial fused positioning model are updated, and a next round of training process is performed. The training ending condition may be set according to actual requirements. For example, analysis as to whether convergence will be achieved is performed based on sample GPS positioning information, sample fused positioned positions corresponding to the fused positioning manners and fused positioning performance parameters, to serve as the training ending condition. The training ending condition is not specifically limited in this embodiment.

The fused positioning model obtained based on the foregoing training process determines the weights corresponding to the input parameter features of the fused positioning model. That is, the weights corresponding to the input parameter features may be different. Therefore, in positioning based on the fused positioning model, probabilities that the change and update information belongs to classes of the fused positioning manners may be determined based on values corresponding to the input parameter features corresponding to the change and update information and the weights corresponding to the input parameter features, so that a matched fused positioning manner may be obtained so as to perform actual fused positioning.

The fused positioning model obtained through the foregoing training may be applied to an actual process of fused positioning. In a case that the training process is performed by a third party (for example, a server), the fused positioning model may be transmitted to positioning terminals (for example, an in-vehicle navigator, a mobile terminal, and the like), for the positioning terminals to complete the process of fused positioning by using the fused positioning model. The fused positioning model may alternatively be stored in the third party. In the positioning process, the third party complete the process of fused positioning based on GPS positioning information and attitude change information (or inertial positioning information determined based on the attitude change information) uploaded by the terminal, and returns an obtained final positioned position to the terminal for use. In a case that the training process is performed by the positioning terminal (for example, an in-vehicle navigation device), the positioning terminal may directly store the fused positioning model and apply the fused positioning model to a subsequent positioning process.

Step 305 includes obtaining current change and update information, the current change and update information including GPS positioning information and dead reckoning position information, the dead reckoning position information being determined according to attitude change information of a terminal.

Optionally, the foregoing GPS positioning information refers to GPS positioning information detected by a GPS positioning module at a current moment, such as, a GPS angle and a GPS position. The foregoing current attitude change information may be determined by using related parameters detected by an inertial measurement unit.

The inertial measurement unit is an apparatus for measuring a three-axis attitude angle (or angular rate) and acceleration of an object. In an embodiment, the inertial measurement unit may include an accelerometer and a gyroscope. The accelerometer is an instrument used for measuring acceleration. The gyroscope, also referred to as an angular velocity sensor, is an instrument used for measuring rotational angular velocity of an object when deflecting or tilting, or used for sensing directions. In this case, the corresponding current attitude change information may include parameters such as measured acceleration and angular velocity.

Step 306 includes determining a fused positioning manner matching the current change and update information.

Optionally, in this embodiment, by inputting the current change and update information into the fused positioning model, the fused positioning manner corresponding to the current change and update information may be outputted.

Step 307 includes determining error information according to the current change and update information.

Optionally, the error information is determined based on the GPS positioning information and the dead reckoning position information. The error information may include at least one of a GPS positioning error, a dead reckoning error, an inter-positioning-information error between the GPS positioning information and the dead reckoning position information.

Step 308 includes performing fused positioning on the GPS positioning information and the dead reckoning position information in the current change and update information according to the fused positioning manner in combination with the error information, to obtain a current positioned position.

The fused positioning based on the matched fused positioning manner may be performed based on an existing fused positioning process of the matched fused positioning manner, or based on an improved process of the fused positioning manner, which is not limited in this embodiment. In a case that the matched fused positioning manner is a first fused positioning manner (for example, a Kalman filter-based fused positioning manner), the fused positioning is performed on corresponding information in the current change and update information in combination with the foregoing determined error information, to determine the current positioned position. For example, in an embodiment, an initial positioned position obtained by the fused positioning is updated according to the foregoing determined error information, to obtain a final current positioned position.

In an embodiment, for example, the matched fused positioning manner is the Kalman filter-based fused positioning manner. The Kalman filter-based fused positioning manner used for the fused positioning to obtain the final positioned position may be any Kalman filter-based fused positioning manner which exists currently or may emerge in the future, which is not further detailed herein redundantly. As described above, in performing the fused positioning, a weighted parameter Q of a predicted value may be used as a fixed value, a weighted parameter R of a measured value may be used as an adjustable value, and the weighted parameter R of the measured value may be adjusted based on a relative error of the GPS positioning information.

It is to be understood that, although several detailed fused positioning algorithms are provided in the description of the foregoing embodiments, in an actual technical implementation process, other fused positioning manners may be further supplemented in or be added to the fused positioning model, which is not limited.

Optionally, after performing the fused positioning according to the matched fused positioning manner, to determine the current positioned position, the method may further include the following steps: performing fused positioning in the first fused positioning manner at each of positioning moments in a preset time period from a current moment, to determine positioned positions corresponding to the positioning moments. In this way, after the matched fused positioning manner is obtained, the matched fused positioning manner may be used for fused positioning at positioning moments in a subsequent preset time period, and there is no need for dynamically and constantly matching a fused positioning manner, thereby improving processing efficiency and improving smoothness.

For example, in an embodiment, after the matched fused positioning manner (which may be limited to a fused positioning manner matched based on the fused positioning model in an embodiment) is obtained at the current moment, the fused positioning may be performed in the fused positioning manner at each of the positioning moments in the preset time period from the current moment. After the preset time period elapses, matching for a fused positioning manner is performed again based on the fused positioning model, to verify whether the matched fused positioning manner still has relatively good fused positioning performance. In a case that all fused positioning manners matched for a specified number of successive times N1 or in a specified continuous time period T1 are inconsistent, matching for a fused positioning manner may be performed again based on the fused positioning model for a specified number of successive times N2 or for a specified continuous time period T2, until all fused positioning manners matched for a specified number of successive times N3 or in a specified continuous time period T3 remain consistent. Values of N1, N2, and N3 may be the same or different, and values of T1, T2, and T3 may be the same or different.

In an embodiment, in a case that all of the fused positioning manners matched for the specified number of successive times N1 or in the specified continuous time period T1 are inconsistent, the training process may be directly performed again, so that a new fused positioning model is obtained by training for application. In another embodiment, after the matched fused positioning manner (which may be limited to a fused positioning manner matched based on the fused positioning model in an embodiment) is obtained at the current moment, the training process may be directly performed again after the preset time period from the current moment elapses, so that a new fused positioning model is obtained by training for application.

According to the above, in the positioning method provided in this embodiment of this application, GPS positioning information and dead reckoning position information are obtained, and a matched fused positioning manner and error information are determined based on the information. Then, fused positioning is performed according to the matched fused positioning manner and the error information, to obtain a current positioned position, so that the matched fused positioning manner can be classified dynamically, to perform the fused positioning, which can effectively improve precision of the fused positioning, and can provide relatively good robustness for the performance of different scenarios.

Based on the same idea as the foregoing positioning method, in an embodiment, a positioning apparatus is provided. The apparatus can be applied to any device which can obtain GPS information and inertial sensing parameters measured by an inertial measurement unit and perform fused positioning, for example, an in-vehicle navigation device.

As shown in FIG. 6, the positioning apparatus includes an obtaining module 610, a determining module 620, and a positioning module 630;

where the obtaining module 610 is configured to obtain current change and update information, the current change and update information including GPS positioning information and dead reckoning position information, the dead reckoning position information being determined according to attitude change information of a terminal;

the determining module 620 is configured to determine a fused positioning manner matching the current change and update information, the fused positioning manner being used for performing fused positioning by using information in the current change and update information;

the determining module 620 is further configured to determine error information according to the current change and update information, the error information being used for indicating error conditions of the current change and update information; and

the positioning module 630 is configured to perform fused positioning on the GPS positioning information and the dead reckoning position information in the current change and update information according to the fused positioning manner in combination with the error information, to obtain a current positioned position.

In an optional embodiment, the determining module 620 is further configured to perform odometer error processing on odometer data recorded by an odometer, and perform dead reckoning according to the current attitude change information after performing a speed update based on the odometer data subjected to the odometer error processing, to obtain the dead reckoning position information, the attitude change information including speed information;

the determining module 620 is further configured to update the attitude change information according to a rotation speed of a gyroscope and two angular velocity increments successively acquired by the gyroscope, and perform dead reckoning according to the updated current attitude change information, to obtain the dead reckoning position information;

the determining module 620 is further configured to perform dead reckoning according to the current attitude change information after performing attitude alignment based on acceleration acquired by an accelerometer, to obtain the dead reckoning position information; and

the determining module 620 is further configured to perform dead reckoning according to the current attitude change information after performing attitude alignment based on a GPS azimuth and acceleration acquired by the accelerometer, to obtain the dead reckoning position information.

In an optional embodiment, the determining module 620 is further configured to determine model input features based on the current change and update information, and input the model input features into a fused positioning model obtained by training, to determine the fused positioning manner matching the current change and update information.

In an optional embodiment, the determining module 620 is further configured to perform the fused positioning in the fused positioning manner at positioning moments in a preset time period from a current moment, to determine positioned positions corresponding to the positioning moments.

In an optional embodiment, the positioning module 630 is further configured to perform the fused positioning in the fused positioning manner in a preset time period from matching of a preceding fused positioning manner before the current moment.

In an optional embodiment, the fused positioning manner includes either a Kalman filter-based fused positioning manner or a particle filter-based fused positioning manner.

In an optional embodiment, the obtaining module 610 is further configured to obtain a preset number of pieces of sample change and update information, perform, for each piece of sample change and update information, fused positioning on the piece of sample change and update information in fused positioning manners in an initial fused positioning model, and obtain fused positioning performance parameters of the fused positioning performed on the piece of sample change and update information in respective fused positioning manners; and

the determining module 620 is further configured to determine, based on the fused positioning performance parameters, preferred fused positioning manners corresponding to respective pieces of sample change and update information from the fused positioning manners, and determine a correspondence between change and update information and fused positioning manners according to the preferred fused positioning manners corresponding to the respective pieces of sample change and update information.

In an optional embodiment, the determining module 620 is further configured to determine the preferred fused positioning manners corresponding to the respective pieces of sample change and update information as classification results of sample fused positioning manners corresponding to the respective pieces of sample change and update information, and determine the correspondence between the change and update information and the fused positioning manners based on the respective pieces of sample change and update information and the corresponding classification results of the sample fused positioning manners.

In an optional embodiment, the determining module 620 is further configured to determine sample numbers of pieces of sample change and update information corresponding to the preferred fused positioning manners, determine a preferred fused positioning manner corresponding to a maximum sample number as a fused positioning manner corresponding to the preset number of pieces of sample change and update information, and determine, based on the preset number of pieces of sample change and update information or the maximum sample number of pieces of sample change and update information, and classification results of the fused positioning manners, a correspondence between the change and update information and the classification results of the fused positioning manners.

In an optional embodiment, the determining module 620 is further configured to determine the fused positioning model based on the determined correspondence between the change and update information and the classification results of the fused positioning manners in a case that a training ending condition is met, otherwise, update the initial fused positioning model and perform a next round of training process.

According to the above, by the positioning apparatus provided in this embodiment of this application, GPS positioning information and dead reckoning position information are obtained, and a matched fused positioning manner and error information are determined based on the information. Then, fused positioning is performed according to the matched fused positioning manner and the error information, to obtain a current positioned position, so that the matched fused positioning manner can be classified dynamically, to perform the fused positioning, which can effectively improve precision of the fused positioning, and can provide relatively good robustness for the performance of different scenarios.

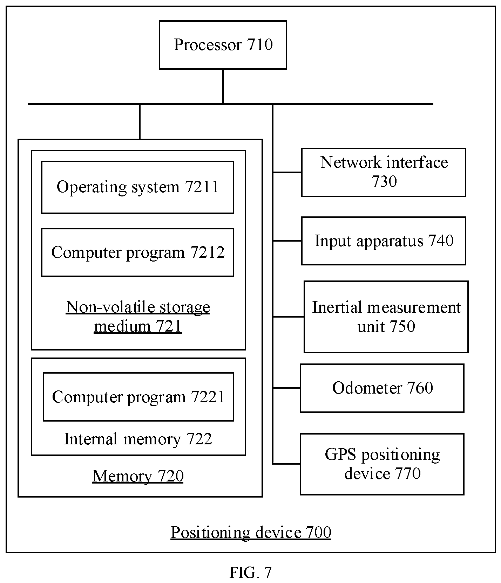

In an embodiment, a positioning device 700 is provided. The positioning device 700 may be any device that can perform positioning according to inertial sensing parameters measured by an inertial measurement unit 750, such as a terminal or a server. The terminal may be any terminal than can perform inertial measurement, such as an in-vehicle navigation device. The server may be any server that can obtain the inertial sensing parameters measured by the inertial measurement unit 750, and perform the fused positioning by using the inertial sensing parameters. An internal structure of the positioning device 700 in an embodiment may be as shown in FIG. 7. The computer device includes a processor 710 and a memory 720 connected by using a system bus, and may further include a network interface 730 connected by using the system bus. In a case that the computer device is a terminal device, the computer device may further include a display screen and an input apparatus 740. In a case that the positioning device 700 is a device that can automatically measure the inertial sensing parameters such as an in-vehicle navigation device, the positioning device 700 may further include devices such as an inertial measurement unit 750, a GPS positioning device 770, an accelerometer and an odometer 760 connected by using the system bus.

The processor 710 of the computer device is configured to provide computing and control capabilities. The memory 720 of the computer device includes a non-volatile storage medium 721 and an internal memory 722. The non-volatile storage medium 721 stores an operating system 7211 and a computer program 7212. The internal memory 722 provides an environment for running of the operating system 7211 and the computer programs 7212 in the non-volatile storage medium 721 and a computer program 7221. The network interface 730 of the computer device is configured to communicate with an external terminal through a network connection. The computer program is executed by the processor 710 to implement a positioning method. The display screen of the computer device may be a liquid crystal display screen or an e-ink display screen. The input apparatus 740 of the computer device may be a touch layer covering the display screen, or may be a button, a trackball, or a touchpad disposed on a housing of the computer device, or may be an external keyboard, a touchpad, a mouse or the like.

A person skilled in the art may understand that, the structure shown in FIG. 7 is only a block diagram of a partial structure related to the solution in this application, and does not limit the inertial navigation device to which the solution of this application is applied. Specifically, the specific inertial navigation device may include more or fewer components than those shown in the figure, or some components may be combined, or a different component deployment may be used.

Based on the above, in an embodiment, an inertial navigation device is further provided, including a memory 720 and a processor 710, the memory 720 storing a computer program, and the processor 710, when executing the computer program, performing the steps of the method in any one of the foregoing embodiments.

A person of ordinary skill in the art may understand that some or all procedures in the method in the foregoing embodiments may be implemented by a computer program instructing related hardware. The computer program may be stored in a non-volatile computer-readable storage medium, and when the program is executed, the procedures in the foregoing method embodiments may be implemented. Any reference to a memory, a storage, a database, or another medium used in the various embodiments provided in this application may include a non-volatile and/or volatile memory. The non-volatile memory may include a ROM, a programmable ROM (PROM), an electrically programmable ROM (EPROM), an electrically erasable programmable ROM (EEPROM), or a flash. The volatile memory may include a RAM or an external high-speed cache. For the purpose of description instead of limitation, the RAM is available in a plurality of forms, such as a static RAM (SRAM), a dynamic RAM (DRAM), a synchronous DRAM (SDRAM), a double data rate SDRAM (DDRSDRAM), an enhanced SDRAM (ESDRAM), a synchlink DRAM (SLDRAM), a rambus direct RAM (RDRAM), a direct rambus dynamic RAM (DRDRAM), and a rambus dynamic RAM (RDRAM).

The technical features in the foregoing embodiments may be combined arbitrarily. For concise description, not all possible combinations of the technical features in the embodiment are described. However, the combinations of the technical features shall all be considered as falling within the scope recorded in this specification provided that they do not conflict with each other.

The foregoing embodiments only show several implementations of this application and are described in detail, but they are not to be construed as a limit to the patent scope of the present disclosure. It should be noted that a person of ordinary skill in the art may further make variations and improvements without departing from the ideas of this application, and the variations and improvements shall fall within the protection scope of this application. Therefore, the protection scope of the patent of this application shall be subject to the appended claims.

**Claims**

1. A positioning method, applied to a terminal, the method comprising:

    obtaining current change and update information, the current change and update information comprising GPS positioning information and dead reckoning position information, the dead reckoning position information being determined according to attitude change information of the terminal;
    determining a fused positioning manner matching the current change and update information, the fused positioning manner being used for performing fused positioning by using information in the current change and update information;
    determining error information according to the current change and update information, the error information being used for indicating error conditions of the current change and update information; and
    performing fused positioning on the GPS positioning information and the dead reckoning position information in the current change and update information according to the fused positioning manner in combination with the error information, to obtain a current positioned position.

2. The method according to claim 1, wherein the dead reckoning position information is determined in at least one of the following manners:

    performing odometer error processing on odometer data recorded by an odometer, and performing dead reckoning according to the current attitude change information after performing a speed update based on the odometer data subjected to the odometer error processing, to obtain the dead reckoning position information, the attitude change information comprising speed information;
    updating the attitude change information according to a rotation speed of a gyroscope and two angular velocity increments successively acquired by the gyroscope, and performing dead reckoning according to the updated current attitude change information, to obtain the dead reckoning position information;
    performing dead reckoning according to the current attitude change information after performing attitude alignment based on acceleration acquired by an accelerometer, to obtain the dead reckoning position information; and
    performing dead reckoning according to the current attitude change information after performing attitude alignment based on a GPS azimuth and acceleration acquired by the accelerometer, to obtain the dead reckoning position information.

3. The method according to claim 1, wherein the determining a fused positioning manner matching the current change and update information comprises:

determining model input features based on the current change and update information; and
inputting the model input features into a fused positioning model obtained by training, to determine the fused positioning manner matching the current change and update information.

4.  The method according to claim 1, wherein after the obtaining a current positioned position, the method further comprises:
performing the fused positioning in the fused positioning manner at positioning moments in a preset time period from a current moment, to determine positioned positions corresponding to the positioning moments.

5.  The method according to claim 1, wherein after the determining a fused positioning manner matching the current change and update information, the method further comprises:
performing the fused positioning in the fused positioning manner in a preset time period from matching of a preceding fused positioning manner before a current moment.

6.  The method according to any one of claims 1 to 5, wherein
the fused positioning manner comprises either a Kalman filter-based fused positioning manner or a particle filter-based fused positioning manner.

7.  The method according to claim 3, wherein before the inputting the model input features into a fused positioning model obtained by training, the method comprises:

    obtaining a preset number of pieces of sample change and update information;
    performing, for each piece of sample change and update information, fused positioning on the piece of sample change and update information in fused positioning manners in an initial fused positioning model, and obtaining fused positioning performance parameters of the fused positioning performed on the piece of sample change and update information in respective fused positioning manners;
    determining, based on the fused positioning performance parameters, preferred fused positioning manners corresponding to respective pieces of sample change and update information from the fused positioning manners; and
    determining a correspondence between change and update information and fused positioning manners according to the preferred fused positioning manners corresponding to the respective pieces of sample change and update information.

8.  The method according to claim 7, wherein the determining a correspondence between change and update information and fused positioning manners according to the preferred fused positioning manners corresponding to the respective pieces of sample change and update information comprises:

    determining the preferred fused positioning manners corresponding to the respective pieces of sample change and update information as classification results of sample fused positioning manners corresponding to the respective pieces of sample change and update information; and
    determining the correspondence between the change and update information and the fused positioning manners based on the respective pieces of sample change and update information and the corresponding classification results of the sample fused positioning manners.

9.  The method according to claim 7, wherein the determining a correspondence between change and update information and fused positioning manners according to the preferred fused positioning manners corresponding to the respective pieces of sample change and update information comprises:

    determining sample numbers of pieces of sample change and update information corresponding to the preferred fused positioning manners;
    determining a preferred fused positioning manner corresponding to a maximum sample number as a fused positioning manner corresponding to the preset number of pieces of sample change and update information; and
    determining, based on the preset number of pieces of sample change and update information or the maximum sample number of pieces of sample change and update information, and classification results of the fused positioning manners, a correspondence between the change and update information and the classification results of the fused positioning manners.

10. The method according to claim 7, wherein after the determining a correspondence between change and update information and classification results of the fused positioning manners, the method further comprises:
determining the fused positioning model based on the determined correspondence between the change and update information and the classification results of the fused positioning manners in a case that a training ending condition is met; otherwise, updating the initial fused positioning model, and performing a next round of training process.

11. A positioning apparatus, applied to a terminal, the apparatus comprising:

an obtaining module, configured to obtain current change and update information, the current change and update information comprising GPS positioning information and dead reckoning position information, the dead reckoning position information being determined according to attitude change information of the terminal;
a determining module, configured to determine a fused positioning manner matching the current change and update information, the fused positioning manner being used for performing fused positioning by using information in the current change and update information;
the determining module being further configured to determine error information according to the current change and update information, the error information being used for indicating error conditions of the current change and update information; and
a positioning module, configured to perform fused positioning on the GPS positioning information and the dead reckoning position information in the current change and update information according to the fused positioning manner in combination with the error information, to obtain a current positioned position.

12. The apparatus according to claim 11, wherein the determining module is further configured to perform odometer error processing on odometer data recorded by an odometer, and perform dead reckoning according to the current attitude change information after performing a speed update based on the odometer data subjected to the odometer error processing, to obtain the dead reckoning position information, the attitude change information comprising speed information;
the determining module is further configured to update the attitude change information according to a rotation speed of a gyroscope and two angular velocity increments successively acquired by the gyroscope, and perform dead reckoning according to the updated current attitude change information, to obtain the dead reckoning position information;
the determining module is further configured to perform dead reckoning according to the current attitude change information after performing attitude alignment based on acceleration acquired by an accelerometer, to obtain the dead reckoning position information; and
the determining module is further configured to perform dead reckoning according to the current attitude change information after performing attitude alignment based on a GPS azimuth and acceleration acquired by the accelerometer, to obtain the dead reckoning position information.

13. The apparatus according to claim 11, wherein the determining module is further configured to determine model input features based on the current change and update information, and input the model input features into a fused positioning model obtained by training, to determine the fused positioning manner matching the current change and update information.

14. The apparatus according to claim 11, wherein the determining module is further configured to perform the fused positioning in the fused positioning manner at positioning moments in a preset time period from a current moment, to determine positioned positions corresponding to the positioning moments.

15. The apparatus according to claim 11, wherein the positioning module is further configured to perform the fused positioning in the fused positioning manner in a preset time period from matching of a preceding fused positioning manner before a current moment.

16. The apparatus according to any one of claims 11 to 15, wherein
the fused positioning manner comprises either a Kalman filter-based fused positioning manner or a particle filter-based fused positioning manner.

17. The apparatus according to claim 13, wherein the obtaining module is further configured to obtain a preset number of pieces of sample change and update information, perform, for each piece of sample change and update information, fused positioning on the piece of sample change and update information in fused positioning manners in an initial fused positioning model, and obtain fused positioning performance parameters of the fused positioning performed on the piece of sample change and update information in respective fused positioning manners; and

the determining module is further configured to determine, based on the fused positioning performance parameters, preferred fused positioning manners corresponding to respective pieces of sample change and update information from the fused positioning manners, and determine a correspondence between change and update information and fused positioning manners according to the preferred fused positioning manners corresponding to the respective pieces of sample change and update information.

18. The apparatus according to claim 17, wherein the determining module is further configured to determine the preferred fused positioning manners corresponding to the respective pieces of sample change and update information as classification results of sample fused positioning manners corresponding to the respective pieces of sample change and update information, and determine the correspondence between the change and update information and the fused positioning manners based on the respective pieces of sample change and update information and the corresponding classification results of the sample fused positioning manners.

19. The apparatus according to claim 17, wherein the determining module is further configured to determine sample numbers of pieces of sample change and update information corresponding to the preferred fused positioning manners, determine a preferred fused positioning manner corresponding to a maximum sample number as a fused positioning manner corresponding to the preset number of pieces of sample change and update information, and determine, based on the preset number of pieces of sample change and update information or the maximum sample number of pieces of sample change and update information, and classification results of the fused positioning manners, a correspondence between the change and update information and the classification results of the fused positioning manners.

20. The apparatus according to claim 17, wherein the determining module is further configured to determine the fused positioning model based on the determined correspondence between the change and update information and the classification results of the fused positioning manners in a case that a training ending condition is met, otherwise, update the initial fused positioning model and perform a next round of training process.

21. A positioning device, comprising a memory and a processor, the memory storing a computer program, and the processor, when executing the computer program, performing the steps of the method according to any one of claims 1 to 10.

22. A computer-readable storage medium, with a computer program stored thereon, the computer program, when executed by a processor, implementing the steps of the method according to any one of claims 1 to 10.

Obtain current change and update information, the current change and update information including GPS positioning information and dead reckoning position information, the dead reckoning position information being determined according to attitude change information of a terminal — 101

Determine a fused positioning manner matching the current change and update information, the fused positioning manner being used for performing fused positioning by using information in the current change and update information — 102

Determine error information according to the current change and update information, the error information being used for indicating error conditions of the current change and update information — 103

Perform the fused positioning on the GPS positioning information and the dead reckoning position information in the current change and update information according to the fused positioning manner in combination with the error information, to obtain a current positioned position — 104

FIG. 1

GPS

Inertial measurement unit 210

Accelerometer

Gyroscope

Odometer 220

Dead reckoning (DR)

Fused positioning 230

Positioned position

FIG. 2

Obtain a preset number of pieces of sample change and update information and determining sample input features of respective pieces of the sample change and update information ⎯⎯ 301

Perform, for each piece of sample change and update information, the fused positioning on the piece of sample change and update information in fused positioning manners in an initial fused positioning model, and obtain fused positioning performance parameters of the fused positioning performed on the piece of sample change and update information in respective fused positioning manners ⎯⎯ 302

Determine, based on the fused positioning performance parameters, preferred fused positioning manners corresponding to respective piece of sample change and update information from the fused positioning manners ⎯⎯ 303

Determine a correspondence between change and update information and classification results of fused positioning manners according to the preferred fused positioning manners corresponding to the respective pieces of sample change and update information ⎯⎯ 304

Obtain current change and update information, the current change and update information including GPS positioning information and dead reckoning position information, the dead reckoning position information being determined according to attitude change information of a terminal ⎯⎯ 305

Determine a fused positioning manner matching the current change and update information ⎯⎯ 306

Determine error information according to the current change and update information ⎯⎯ 307

Perform fused positioning on the GPS positioning information and the dead reckoning position information in the current change and update information according to the fused positioning manner in combination with the error information, to obtain a current positioned position ⎯⎯ 308

FIG. 3

Determine the preferred fused positioning manners corresponding to the respective pieces of sample change and update information as classification results of sample fused positioning manners corresponding to the respective pieces of sample change and update information — 401

Determine the correspondence between the change and update information and the fused positioning manners based on the respective pieces of sample change and update information and the corresponding classification results of the sample fused positioning manners — 402

FIG. 4

Determine sample numbers of pieces of sample change and update information corresponding to the preferred fused positioning manners — 501

Determine a preferred fused positioning manner corresponding to a maximum sample number as a fused positioning manner corresponding to the preset number of pieces of sample change and update information — 502

Determine, based on the preset number of pieces of sample change and update information or the maximum sample number of pieces of sample change and update information, and classification results of the fused positioning manners, a correspondence between the change and update information and the classification results of the fused positioning manners — 503

FIG. 5

Obtaining module — 610

Determining module — 620

Positioning module — 630

FIG. 6

Processor 710

Operating system 7211

Computer program 7212

Non-volatile storage medium 721

Computer program 7221

Internal memory 722

Memory 720

Network interface 730

Input apparatus 740

Inertial measurement unit 750

Odometer 760

GPS positioning device 770

Positioning device 700

FIG. 7

## INTERNATIONAL SEARCH REPORT

| International application No. |
|---|
| **PCT/CN2019/103662** |

### A.  CLASSIFICATION OF SUBJECT MATTER

G01S 19/47(2010.01)i

According to International Patent Classification (IPC) or to both national classification and IPC

### B.  FIELDS SEARCHED

Minimum documentation searched (classification system followed by classification symbols)

G01S; G01C

Documentation searched other than minimum documentation to the extent that such documents are included in the fields searched

Electronic data base consulted during the international search (name of data base and, where practicable, search terms used)

CNABS, CNTXT, CNKI, VEN: 卫星, 导航, 定位, 组合, 耦合, 融合, 滤波, 估计, 卡尔曼, 粒子, 航位推算, 惯性, GPS, GNSS, locat+, posit+, DR, Dead-Reckoning, kalman filter, PF, particle filter, IMU

### C.  DOCUMENTS CONSIDERED TO BE RELEVANT

| Category* | Citation of document, with indication, where appropriate, of the relevant passages | Relevant to claim No. |
|---|---|---|
| Y | CN 1908587 A (HUNAN UNIVERSITY) 07 February 2007 (2007-02-07) description, paragraphs [0006]-[0011] | 1-22 |
| Y | CN 102778686 A (SOUTHEAST UNIVERSITY) 14 November 2012 (2012-11-14) description, paragraphs [0006] and [0007] | 1-22 |
| A | CN 104502942 A (CHC TECHNOLOGY CO., LTD.) 08 April 2015 (2015-04-08) entire document | 1-22 |
| A | CN 104819716 A (BEIJING UNIVERSITY OF TECHNOLOGY) 05 August 2015 (2015-08-05) entire document | 1-22 |
| A | CN 108303721 A (BEIJING JINGWEI HIRAIN TECHNOLOGIES CO., LTD.) 20 July 2018 (2018-07-20) entire document | 1-22 |
| A | US 2015142311 A1 (GEN MOTORS LLC) 21 May 2015 (2015-05-21) entire document | 1-22 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 November 2019** | **04 December 2019** |

| Name and mailing address of the ISA/CN | Authorized officer |
|---|---|
| **China National Intellectual Property Administration** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/103662**

| Patent document cited in search report | | | Publication date (day/month/year) | Patent family member(s) | | | Publication date (day/month/year) |
|---|---|---|---|---|---|---|---|
| CN | 1908587 | A | 07 February 2007 | CN | 100580379 | C | 13 January 2010 |
| CN | 102778686 | A | 14 November 2012 | | None | | |
| CN | 104502942 | A | 08 April 2015 | | None | | |
| CN | 104819716 | A | 05 August 2015 | | None | | |
| CN | 108303721 | A | 20 July 2018 | | None | | |
| US | 2015142311 | A1 | 21 May 2015 | US | 9366764 | B2 | 14 June 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811025588